**Europäisches Patentamt**

**European Patent Office**

**Office européen des brevets**

(19)

(11) Veröffentlichungsnummer: **0 117 975**
**B1**

(12)

# EUROPÄISCHE PATENTSCHRIFT

(45) Veröffentlichungstag der Patentschrift:
14.12.88

(21) Anmeldenummer: 84100257.9

(22) Anmeldetag: 12.01.84

(51) Int. Cl.⁴: **B 25 J 11/00**, B 23 Q 7/00

(54) Vorrichtung zur Handhabung von Werkstücken, Montageteilen oder dergleichen.

(30) Priorität: 05.02.83 DE 3303908

(43) Veröffentlichungstag der Anmeldung:
12.09.84 Patentblatt 84/37

(45) Bekanntmachung des Hinweises auf die Patenterteilung:
14.12.88 Patentblatt 88/50

(84) Benannte Vertragsstaaten:
AT BE CH DE FR GB IT LI NL

(56) Entgegenhaltungen:
DE-A-2 903 732
US-A-4 002 245

(73) Patentinhaber: **MICO- Gesellschaft für industrielle Automation mbH, Grünenbergstrasse 2, D-7320 Göppingen (DE)**

(72) Erfinder: **Miksch, Heribert, Helferichstrasse 18, D-7320 Göppingen (DE)**
Erfinder: **Storz, Martin, Dipl.- Ing., Pfingsthalde 32, D-7340 Geislingen (DE)**

(74) Vertreter: **Lemke, Jörg- Michael, Dipl.- Ing., Wolframstrasse 9, D-8900 Augsburg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Vorrichtung zur Handhabung von Werkstücken, Montageteilen oder dergleichen mit einem in einem Getriebgehäuse angeordneten, eine Raststellung aufweisenden Schrittschaltgetriebe, das über auf einer Antriebswelle befestigte Kurvenscheiben zwei reziproke Bewegungen steuert, nämlich als eine erste Bewegung diejenige eines am Gehäuse geführten Schlittens und als eine zweite Bewegung diejenige eines Schlittens im wesentlichen quer zur ersten Bewegung geführten Trägers.

Derartige Vorrichtungen werden zum automatischen Entnehmen, Umsetzen und Transportieren von Montageteilen, zum Beschicken von Werkzeugmaschinen mit Werkstücken und dergleichen verwendet. Zu diesem Zweck wird an dem Träger ein entsprechendes Werkzeug zum Ergreifen des Werkstücks bzw. Montageteils befestigt. Der Bewegungsablauf des Trägers mit dem Werkzeug besteht dabei zumeist in einem Anheben, Vorwärtsbewegen, Absenken und anschließenden Zurückbewegen des Trägers. Je nach Anordnung der Kurvenscheiben auf der Antriebswelle läßt sich dieses Zurückbewegen unmittelbar bewirken oder nach einem dem Absenken des Trägers und gegebenenfalls Absetzen des Werkstücks bzw. Montageteils folgenden, erneuten Anheben; in diesem Falle folgt der Zurückbewegung noch ein Absenken, um wieder die Raststellung zu erreichen.

Bei einer bekannten Vorrichtung dieser Bauart (US-PS-4 002 245) ist auf der Antriebswelle jeweils eine Kurvenscheibe für die Steuerung des Schlittens und eine Kurvenscheibe für die Steuerung des Trägers vorgesehen, wobei die Betätigung jeweils über einen Hebel erfolgt, dessen kürzerer Hebelarm mit seinem eine Rolle aufweisenden, freien Ende mittels Federkraft in Anlage am Umfang der zugehörigen Kurvenscheibe gehalten wird und dessen längerer Hebelarm über eine Kulissenführung die Hin- und Herbewegung bewirkt. Daraus folgt eine ungünstige Übersetzung und zudem Verstärkung der vorhandenen Fertigungstoleranzen, woraus eine zunehmende Ungenauigkeit mit zunehmendem Verschleiß zwischen der Kurvenscheibe und der Rolle des Hebels folgt, da sich diese Ungenauigkeit der Trägerbewegung nicht nur mit zunehmendem Verschleiß verstärkt, sondern darüberhinaus infolge der ungünstigen Hebelübersetzung von vorneherein größer wird. Die Konstanz der Nullage und die Wiederholbarkeit von milimetergenauen Bewegungen läßt deshalb zu wünschen übrig. Ferner kann infolge der Federwirkung, welche den kürzeren Hebel mit seiner Rolle in Anlage an der Kurvenscheibe halten soll, die Taktzahl bzw. die Anzahl der Betriebsspiele pro Zeiteinheit nicht wünschenswert hoch werden, da durch die entstehenden Beschleunigungen trotz der Gegenwirkung der Feder ein kurzzeitiges Abheben der Rolle vom Umfang der Kurvenscheibe auftreten kann, was zu ruckweisen Bewegungen während des Hubes und ebenfalls zu Ungenauigkeiten führen kann. Schließlich handelt es sich bei diesem bekannten Schrittschaltgetriebe um ein sogenanntes Pendelgetriebe mit einem maximalen Pendelwinkel von lediglich 45°, was in den Endlagen nachteiligerweise elastische Verformungen bei Zug oder Druck ermöglicht, was ebenfalls Ungenauigkeiten hervorruft.

Die Verwendung von Komplementärkurvenscheiben für Schrittgetriebe ist aus der DE-PS-2 903 732 bekannt. Es versteht sich ferner, daß Kurbel-Koppel-Getriebe an sich bekannt sind.

Die der Erfindung zugrundeliegende Aufgabe wird darin gesehen, eine Vorrichtung der eingangs beschriebenen Art zu schaffen, die unter Vermeidung der genannten Nachteile eine höhere Taktzahl bei gleichzeitig genauerer Wiederholbarkeit der gewünschten Bewegungsabläufe gewährleistet.

Diese Aufgabe wird erfindungsgemäß dadurch gelöst, daß sowohl für die Steuerung der ersten Bewegung als auch für die Steuerung der zweiten Bewegung jeweils zwei Komplementärkurvenscheiben vorhanden sind und das erste Komplementärkurvenscheibenpaar über eine erste Steuerwelle und einen aus Kurbel und Koppel bestehenden Kurbeltrieb an den Schlitten gekoppelt ist, wobei die Kurbel und die Koppel in der Raststellung des Schrittschaltgetriebes in einer Totpunktlage angeordnet sind, und das zweite Komplementärkurvenscheibenpaar über eine zweite Steuerwelle mit dem Träger zusammenarbeitet.

Durch die Verwendung von Komplementärkurvenscheibenpaaren ist sichergestellt, daß ein ständiger Kontakt zwischen den Kurvenscheiben und den zugehörigen Steuerelementen der jeweiligen Steuerwellen herrscht, so daß jedwede Federwirkung mit ihren beschriebenen Nachteilen für die Kontakthaltung entbehrlich ist. Bereits hieraus folgt eine größere Genauigkeit des Betriebsspiels und darüberhinaus auch die schnellere Wiederholbarkeit desselben, was letztlich die Effektivität und die Wirtschaftlichkeit der Vorrichtung erhöht. Schließlich sorgt die Verwendung eines aus Kurbel und Koppel bestehenden Kurbeltriebs zwischen der ersten Steuerwelle und dem Schlitten in einer Totpunktlage in der Raststellung des Schrittschaltgetriebes dafür, daß etwa vorhandene Toleranzen oder auch ein infolge Verschleißes entstehendes Spiel praktisch keine Auswirkungen hat, da die Bewegung der Kurbel in einer der beiden sogenannten Totpunktlagen in erster Näherung keinerlei Bewegung des Schlittens erzeugt, da eine durch Toleranzen oder ein geringes Verschleißspiel hervorgerufene Verlagerung der Kurbel oder der Koppel im Bereich der Totpunktlage lediglich senkrecht zur Bewegungsrichtung des Schlittens erfolgen kann, nachdem nun einmal die Tangente an die kreisförmige Bewegungsbahn des freien Endes der Kurbel in diesem Bereich senkrecht auf der Bewegungsrichtung steht. Damit ist gewährleistet, daß auch noch nach längerer Zeit bzw. einer sehr großen Anzahl von Betriebsspielen die Genauigkeit der Positionierung des Schlittens in seinen beiden Endlagen nicht leidet. Zweckmäßig sind übrigens die Kurbel und die Koppel in zurückgezogener Endlage des Schlittens in ihrer sich gegenseitig verlängernden Strecklage angeordnet, in welcher die gleichen Verhältnisse wie in der vorgeschobenen Endlage herrschen, d. h. eine relativ geringfügige, durch Toleranz oder Verschleißspiel bedingte, an sich unerwünschte Verlagerung des Kurbeltriebs aus der absoluten Nullage heraus ergibt noch keine Ungenauigkeit der vorgeschobenen Endlage des Schlittens. Es versteht sich, daß elastische, Ungenauigkeiten hervorrufende Biegeverformungen in den 180°-Totpunktlagen der Kurbel und der Koppel nicht auftreten können.

Gemäß einer bevorzugten Ausführungsform weist das erste Komplementärkurvenscheibenpaar zwei zueinander in Umfangsrichtung versetzte Zahnsegmente für den Eingriff in zwei auf der ersten Steuerwelle angeordnete Rollenkränze auf. Dies hat einerseits den Vorteil einer formschlüssigen Kraft- und Bewegungsübertragung und gibt andererseits die Möglichkeit, während der Stillstandszeiten der ersten Steuerwelle dieselbe durch Anlage der kreisförmigen Partien der Kurvenscheiben an zwei aneinander angrenzenden Rollen der Rollenkränze zu verriegeln. Die zweite Steuerwelle ist vorteilhaft als Pendelwelle mit einem doppeltem Kipphebel ausgerüstet, dessen Enden zur Anlage am zweiten Komplementärkurvenscheibenpaar angeordnet sind. Es versteht sich, daß dabei das eine Ende des Kipphebels, vorzugsweise über eine Rolle, am Umfang der einen Kurvenscheibe anliegt, während das andere Ende des Kipphebels in gleicher Weise am Umfang der zur erstgenannten komplementären Kurvenscheibe anliegt, derart, daß eine axiale Versetzung der beiden Enden des Kipphebels zueinander vorhanden ist, die dem axialen Abstand des auf der Antriebswelle sitzenden zweiten Komplementärkurvenscheibenpaares entspricht. Es versteht sich, daß eine derartige axiale Versetzung bzw. Nebeneinanderanordnung auch für die auf der ersten Steuerwelle angeordneten Rollenkränze gilt, deren axialer Abstand wiederum dem axialen Abstand der Kurvenscheiben des ersten Komplementärkurvenscheibenpaares auf der Antriebswelle entspricht.

Die zweite Steuerwelle arbeitet über einen an ihrem freien Ende vorgesehenen Schwenkhebel durch eine Relativbewegungen zwischen dem Schwenkhebel und dem Schlitten ermöglichende Ausnehmung im Schlitten mit dem Träger zusammen. Das freie Ende des Schwenkhebels greift dabei an einem Gleitlager drehbar an, welches auf einer mit dem Träger fest verbundenen Tragstange hin- und herbewegbar ist.

Die Antriebswelle läßt sich direkt in einer Übersetzung von 1 : 1 antreiben. Zweckmäßig wird jedoch außerdem auf der Antriebswelle ein Schneckenrad angeordnet, so daß der Antrieb über eine gesonderte Motorwelle mit Schnecke erfolgen kann, wobei das Übersetzungsverhältnis sich in weiten Grenzen an den gewünschten Motor und die Taktzahl der Vorrichtung anpassen läßt. Als Antriebsmotor wird ein Elektromotor mit Wirbelstrombremse bevorzugt, der besonders geräuscharm arbeitet. Auf der Antriebswelle läßt sich im übrigen ein Schaltnocken für beliebige Schaltvorgänge anordnen, beispielsweise für das Ausschalten der Vorrichtung nach erfolgtem Betriebsspiel.

Bei einer bevorzugten Ausführungsform ist die Auslegung so getroffen worden, daß zwei Umdrehungen der Antriebswelle einem Betriebsspiel bzw. Takt von Raststellung zu Raststellung entsprechen.

Der Träger ist vorzugsweise eine in ihrer Ebene bewegte Platte, welche Winkelform aufweist und sowohl an ihrer vom Schlitten abgewandten Fläche als auch an ihrer Stirnfläche Gewindebohrungen zur Befestigung von Werkzeugen besitzt. Die Abstände dieser Bohrungen sind zweckmäßig derart gewählt, daß sich bei entsprechend angeordneten Werkzeugen die Wirkung des Längshubs durch ein Zwischenabsetzen des transportierten Werkstücks oder Montageteils verdoppeln läßt.

Weitere vorteilhafte Merkmale ergeben sich aus den Unteransprüchen.

Die Erfindung und ihre vorteilhaften Ausgestaltungen sind im folgenden anhand eines in der Zeichnung dargestellten Ausführungsbeispiels näher erläutert.

Es zeigt:

Fig. 1    eine schaubildlich Ansicht einer horizontal angeordneten Vorrichtung schräg von vorne und oben;

Fig. 2    eine Draufsicht auf die Vorrichtung nach Fig. 1, teilweise geschnitten.

Fig. 3    einen Schnitt längs der Linie III-III in Fig. 2;

Fig. 4    eine Seitenansicht in Pfeilrichtung E in Fig. 2, teilweise geschnitten.

Die dargestellte Ausführungsform besitzt einen Motor 1, ein Getriebegehäuse 2, einen Schlitten 3 und einen Träger 4. Im Getriebegehäuse 2 ist ein Schrittschaltgetriebe angeordnet, das eine Antriebswelle 5 mit Kurvenscheiben 6, 7 bzw. 8, 9 aufweist, die als eine erste reziproke Bewegung diejenige des am Getriebegehäuse 2 geführten Schlittens 3 in Doppelpfeilrichtung A und als eine zweite reziproke Bewegung diejenige des am Schlitten 3 im wesentlichen quer zur ersten Bewegung in Doppelpfeilrichtung B geführten Trägers 4 steuern. Sowohl für die Steuerung der ersten Bewegung als auch für die Steuerung der zweiten Bewegung sind erfindungsgemäß jeweils zwei Komplementärkurvenscheiben 6, 7 bzw. 8, 9 vorhanden. Dabei ist das erste Komplementärkurvenscheibenpaar 6, 7 über eine erste Steuerwelle 10 und einen aus Kurbel 11 und Koppel 12 bestehenden Kurbeltrieb an den Schlitten 3 gekoppelt. Kurbel 11 und Koppel 12 sind in der Raststellung des Schrittschaltgetriebes in einer Totpunktlage angeordnet. Das zweite Komplementärkurvenscheibenpaar 8, 9 arbeitet über eine zweite Steuerwelle 13 mit dem Träger 4 zusammen.

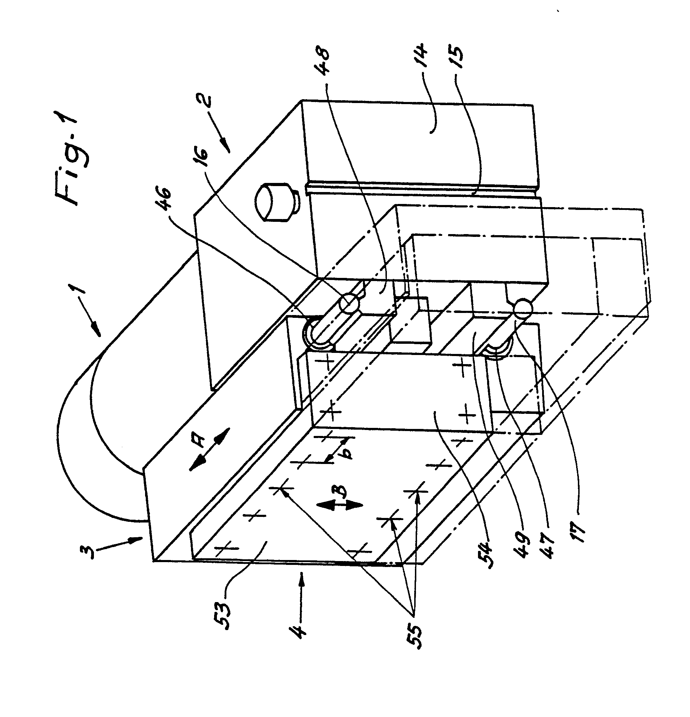

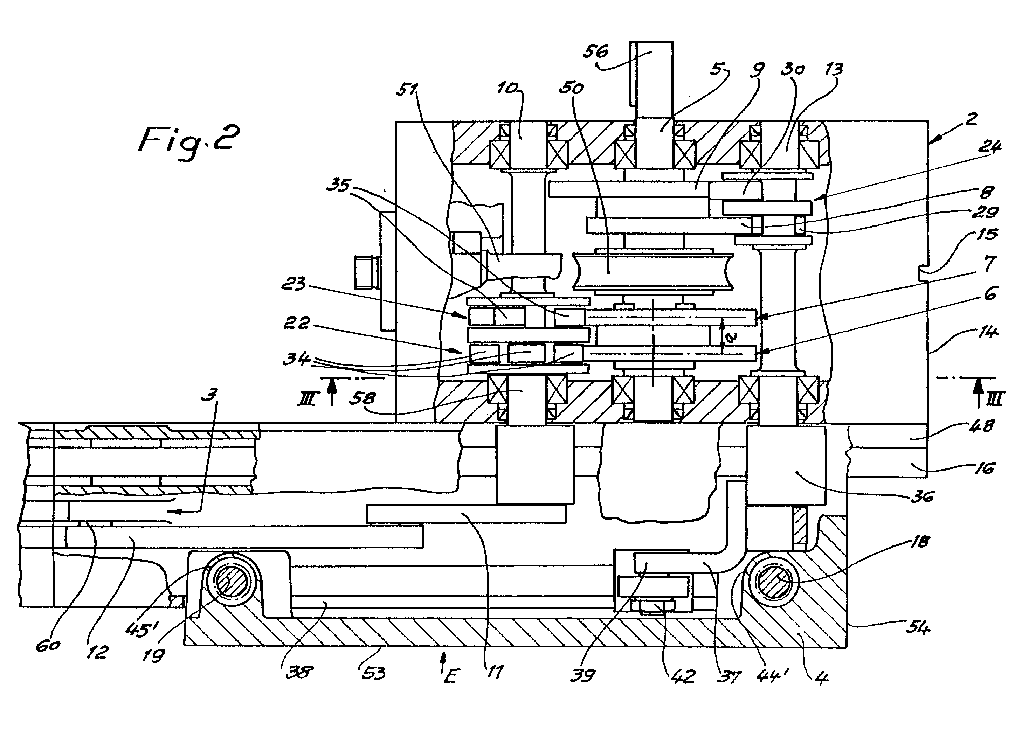

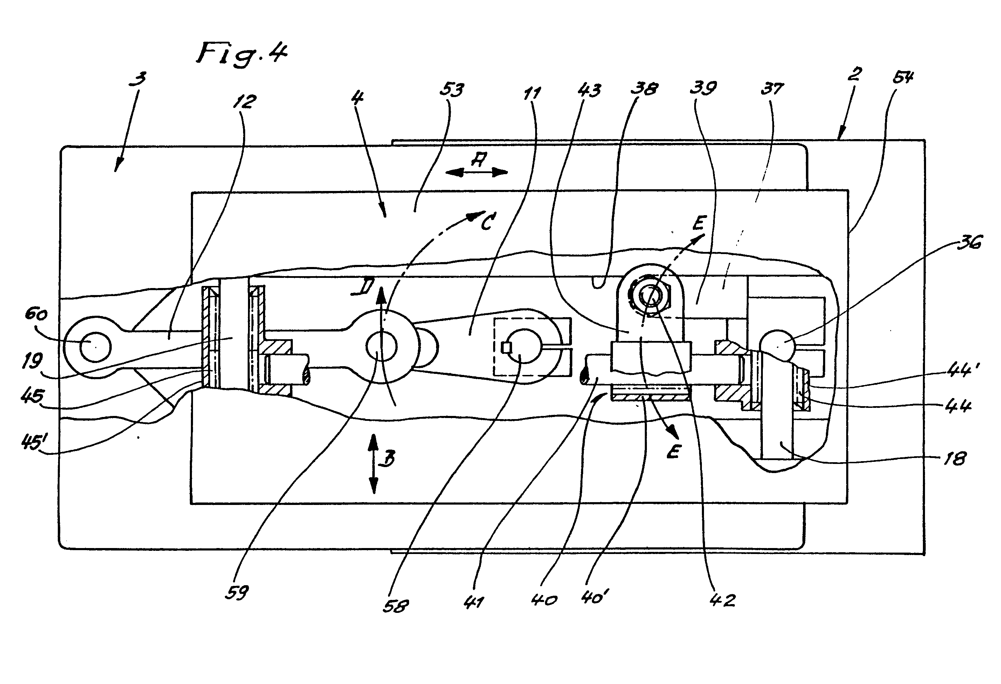

Bei der gezeigten Ausführungsform sind die Kurbel 11 und die Koppel 12 in zurückgezogener, der Rastlage der Vorrichtung entsprechenden Endlage des Schlittens 3 in ihrer sich gegenseitig verlängernden Strecklage angeordnet. Wie ebenfalls die Figuren 2 und 4 besonders deutlich zeigen, ist dabei der Schlitten 3 am Getriebegehäuse 2 im wesentlichen horizontal und der Träger 4 am Schlitten 3 im wesentlichen vertikal geführt. Es versteht sich jedoch, daß sich die Vorrichtung im Raume beliebig anordnen läßt, beispielsweise auch um 90° gedreht in senkrechter Stellung. Das Getriebegehäuse 2 ist vorzugsweise so ausgestaltet, daß es auf seinen sämtlichen freien Seiten an nicht gezeigte Maschinengestelle anschraubbar ist. Ferner ist die Stirnseite 14 des Getriebegehäuses 2 (Figuren 1 und 2) derart ausgebildet, daß dort Zusatzgeräte, wie Pressen oder dergleichen, angeflanscht werden können; durch eine dort angebrachte Paßfedernut 15 kann eine Fixierung des Zusatzgerätes erreicht werden.

Als Führung für den Schlitten 3 sind am Getriebegehäuse 2 zwei horizontale Gleitstangen 16, 17 vorgesehen, auf welchen der Schlitten 3 in Richtung des Doppelpfeils A hin- und hergleiten kann. Für den Träger 4 sind wiederum am Schlitten 3 zwei vertikale Gleitstangen 18, 19 (Figuren 2 und 4) in nicht gezeigter Weise fest angeordnet, die in am Träger 4 vorgesehenen Lagern 44', 45' geführt sind.

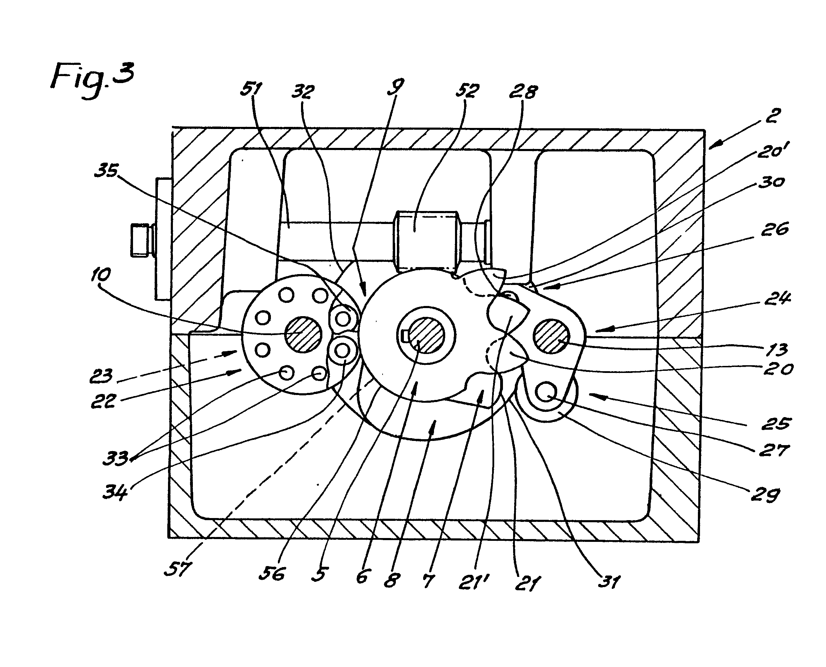

Wie die Figuren 2 und 3 zeigen, besitzt das erste Komplementärkurvenscheibenpaar 6, 7 zwei zueinander in Umfangsrichtung versetzte Zahnsegmente, die bei der gezeigten Ausführungsform jeweils aus zwei Zähnen 20, 20' bzw. 21, 21' bestehen. Diese Zahnsegmente sind für den Eingriff in zwei auf der ersten Steuerwelle 10 angeordnete Rollenkränze 22, 23 bestimmt. Sowohl die Kurvenscheiben 6, 7 des Komplementärkurvenscheibenpaares wie auch die beiden Rollenkränze 22, 23 sind jeweils auf der Antriebswelle 5 bzw. der ersten Steuerwelle 10 in Achsrichtung einander entsprechend in einem Abstand a angeordnet (Figur 2).

Die zweite Steuerwelle 13 ist als Pendelwelle mit einem doppeltem Kipphebel 24 ausgerüstet, dessen Enden 25, 26 derart angeordnet sind, daß sie am zweiten Komplementärkurvenscheibenpaar 8, 9 zur Anlage kommen können. Diese Enden 25, 26 sind bei der gezeigten, bevorzugten Ausführungsform mit auf Achsbolzen 27, 28 sitzenden Rollen 29, 30 versehen, um statt einer Gleitreibung eine rollende Reibung an den Umfängen 31, 32 der Kurvenscheiben 8, 9 zu erzielen. Aus diesem Grunde sind auch die Achsbolzen 33 der Rollenkränze 22, 23 mit Rollen 34, 35 versehen.

Die zweite Steuerwelle 13 arbeitet über einen an ihrem freien Ende 36 vorgesehenen Schwenkhebel 37 durch eine Ausnehmung 38 im Schlitten 3 mit dem Träger 4 zusammen. Diese Ausnehmung 38 ermöglicht eine Relativbewegung zwischen dem Schwenkhebel 37 und dem Schlitten 3, derart, daß der Schlitten 3 in Richtung des Doppelpfeils A sich relativ zum Getriebegehäuse 2 und damit zur zweiten Steuerwelle 13 hin- und herbewegen kann. Das freie Ende 39 des Schwenkhebels greift dabei an einem Gleitlager 40 drehbar an, welches auf einer mit dem Träger 4 fest verbundenen Tragstange 41 hin- und herbewegbar ist. Bei der gezeigten Ausführungsform ist das freie Ende 39 des Schwenkhebels 37 mittels eines Achsbolzens 42 mit einer auf dem Gleitlager 40 vorgesehenen Lasche 43 verbunden.

Der Schlitten 3, der Träger 4 und das freie Ende 39 des Schwenkhebels 37 sind dabei mittels Linearkugellagern auf den zugehörigen Gleit- bzw. Tragstangen geführt. Im Falle der Tragstange 41 ist das Linearkugellager 40' für das freie Ende 39 des Hebels 37 vorgesehen, während der Träger 4 Linearkugellager 44, 45 besitzt. Für den Schlitten 3 sind gemäß Figur 1 geschlitzte Linearkugellager vorgesehen, von denen lediglich die vorderen Linearkugellager 46, 47 sichtbar sind. Diese Schlitzung ist erforderlich, um eine Führung des Schlittens 3 auf den Gleitstangen 16, 17 zu ermöglichen, da diese auf am Getriebegehäuse 2 gehaltenen Konsolen 48, 49 befestigt sind.

Auf der Antriebswelle 5 ist ein Schneckenrad 50 angeordnet (Figur 2), wobei der Antrieb durch den als Wirbelstrombremsmotor ausgebildeten Elektromotor 1 über eine gesonderte Motorwelle 51 mit Schnecke 52 erfolgt. In den Figuren 2 bis 4 ist der Übersichtlichkeit halber der Wirbelstrombremsmotor 1 weggelassen worden. Das letzten Endes aus der Antriebswelle 5, den Komplementärkurvenscheibenpaaren 6, 7 und 8, 9, den Rollenkränzen 22, 23, dem Kipphebel 24 und den beiden Steuerwellen 10 und 13 bestehende Schrittschaltgetriebe ist zweckmäßig derart ausgelegt, daß zwei Umdrehungen der Antriebswelle 5 einem Betriebsspiel bzw. einem Takt von Raststellung zu Raststellung entsprechen. Bei der Raststellung kann sich beispielsweise der Schlitten 3 gemäß den Figuren 1, 2 und 4 in der gezeigten, vollständig zurückgezogenen Lage befinden, wobei je nach Auslegung der Träger 4 ganz angehoben oder ganz abgesenkt worden sein kann. Figur 1 zeigt den Träger 4 in vollständig angehobener Stellung.

Der Träger 4 ist vorzugsweise eine in ihrer Ebene bewegte Platte, die Winkelform aufweist und sowohl an ihrer vom Schlitten 3 abgewandten Fläche 53 als auch an ihrer abgewinkelten Stirnfläche 54 in Figur 1 lediglich angedeutete Gewindebohrungen 55 zur Befestigung von nicht gezeigten Werkzeugen, beispielsweise Greifwerkzeugen, besitzt. Die Abstände b der Bohrungen 55 sind derart gewählt, daß sich bei entsprechend angeordneten Werkzeugen die Wirkung des Längshubs (Doppelpfeil A) durch ein Zwischenabsetzen des transportierten Werkstücks oder Montageteils verdoppeln läßt.

Die Funktion der erläuterten Ausführungsform der Erfindung ist wie folgt:

Die Antriebswelle 5 läßt sich entweder direkt über ihr Antriebsende 56 oder untersetzt über den Schneckentrieb 50, 51 antreiben. Jede vollständige Umdrehung der Antriebswelle 5 bewirkt über das Komplementärkurvenscheibenpaar 6, 7 durch Eingriff von dessen Zahnsegmenten 20, 20' bzw. 21, 21' in die Rollenkränze 22, 23 eine Drehung der ersten Steuerwelle 10 um 180°. Im Bereich der Drehung der Antriebswelle 5 zwischen dem Einrasten und dem Ausrasten der Zahnsegmente 20, 20' bzw. 21, 21' in die Rollenkränze bzw. aus den Rollenkränzen 22, 23 sind die letzteren und damit die erste Steuerwelle 10 dadurch verriegelt, daß jeweils eine Rolle 34 und eine Rolle 35 an den entsprechenden, kreisbogenförmigen Steuerkurven 56 bzw. 57 des Komplementärkurvenscheibenpaares 6, 7 anliegen und abrollen (Figur 3). Diese Verriegelungsstellung der ersten Steuerwelle 10 entspricht jeweils einer Rastlage des Schrittschaltgetriebes bzw. insbesondere des Schlittens 3, in welcher der aus Kurbel 11 und Koppel 12 bestehende Kurbeltrieb sich in einer Strecklage befindet. In der gezeigten, zurückgezogenen Stellung des Schlittens 3 verlängern sich in der gezeigten Strecklage die Kurbel 11 und die Koppel 12 gegenseitig, während in der nicht gezeigten, um 180° gedrehten Stellung der Kurbel dieselbe in der Ansicht gemäß Figur 4 praktisch von der Koppel 12 überdeckt wird, wobei sich der Schlitten 3 in seiner zweiten Extremlage, nämlich in seiner am weitesten vorgeschobenen Stellung befindet. Zwischen den erläuterten Extremlagen des Schlittens 3 dreht sich die Kurbel 11 in Pfeilrichtung C (Figur 4), da sie mittels Form- und Kraftschlusses auf dem freien Ende 58 der ersten Steuerwelle 10 festsitzt und über einen Schwenkbolzen 59 die Kurbel 12 mitnimmt, die wiederum über einen Schwenkbolzen 60 am Schlitten 3 angelenkt ist.

Es ist ohne weiteres ersichtlich, daß beispielsweise in der aus Figur 4 zu entnehmenden Strecklage von Kurbel 11 und Koppel 12 eine infolge Spiel, bedingt durch Toleranzen oder durch Verschleiß, erfolgende Verschwenkung der Kurbel 11 in Pfeilrichtung C (oder auch entgegengesetzt hierzu) praktisch noch keine Verlagerung des Schlittens 3 in Richtung des Doppelpfeils A bewirken kann, da das Verschwenken der Kurbel 11 in erster Näherung praktisch senkrecht zur Bewegungsrichtung gemäß Doppelpfeil A erfolgt, nämlich in der Richtung gemäß Pfeil D in Figur 4.

Da sich in entsprechender, in Umfangsrichtung erfolgter Versetzung auf der Antriebswelle 5 auch noch das zweite Komplementärkurvenscheibenpaar 8, 9 befindet, ergibt sich eine zwangsgeführte Hin- und Herbewegung des Kipphebels 24 mit einem entsprechenden Auf- und Niederschwenken des freien Endes 39 des Schwenkhebels 37 in Richtung des Doppelpfeils E. Somit läßt sich in den jeweiligen Endlagen des Schlittens 3 der Träger 4 anheben bzw. absenken, oder umgekehrt, je nachdem, welche Bewegungsfolgen gewünscht werden. Der Winkelhebel 37 wirkt dabei im Sinne eines Anhebens bzw. eines Absenkens des Trägers in Richtung des Doppelpfeils B über die Tragstange 41 auf den Träger 4 ein, so daß infolge der Gleitverbindung mittels des Gleitlagers 40 die Relativbewegung des Trägers 4 gegenüber dem Schlitten 3 gemäß Doppelpfeil B unabhängig von der Bewegung des Schlittens 3 in Richtung des Doppelpfeils A relativ zum Getriebegehäuse 2 ist. Dies wird nicht nur durch die geschilderte Verbindung zwischen Schwenkhebel 37, Gleitlager 40 und Tragstange 41, sondern auch durch die im Schlitten 3 vorgesehene Durchbrechung bzw. Ausnehmung 38, deren Form und Größe einerseits von der Länge der Hin- und Herbewegung des Schlittens 3 relativ zum Getriebegehäuse 2 und andererseits von der Höhe der Bewegung des Trägers 4 relativ zum Schlitten 3 abhängt, wie auch von der Bewegungsfolge und etwaigen Überschneidungen dieser Bewegungen ermöglicht.

Der Bewegungsbereich des Schlittens (3) einerseits und des Trägers (4) andererseits ergibt sich aus Figur 1, wo diese Bereiche jeweils mit strichpunktierten Linien angedeutet sind.

**Patentansprüche**

1. Vorrichtung zur Handhabung von Werkstücken, Montageteilen oder dergleichen mit einem in einem Getriebegehäuse (2) angeordneten, eine Raststellung aufweisenden Schrittschaltgetriebe, das über auf einer Antriebswelle befestigte Kurvenscheiben (6, 7, 8, 9) zwei reziproke Bewegungen steuert, nämlich als eine erste Bewegung diejenige eines am Gehäuse geführten Schlittens (3) und als eine zweite Bewegung diejenige eines am Schlitten im wesentlichen quer zur ersten Bewegung geführten Trägers (4), dadurch gekennzeichnet, daß sowohl für die Steuerung der ersten Bewegung (A) als auch für die Steuerung der zweiten Bewegung (B) jeweils zwei Komplementärkurvenscheiben (6, 7 bzw. 8, 9) vorhanden sind und das erste Komplementärkurvenscheibenpaar (6, 7) über eine erste Steuerwelle (10) und einen aus Kurbel (11) und Koppel (12) bestehenden Kurbeltrieb an den Schlitten (3) gekoppelt ist, wobei die Kurbel (11) und die Koppel (12) in der Raststellung des Schrittschaltgetriebes in einer Totpunktlage angeordnet sind, und das zweite Komplementärkurvenscheibenpaar (8, 9) über eine zweite Steuerwelle (13) mit dem Träger (4) zusammenarbeitet.

2. Vorrichtung nach Anspruch 1, dadurch gekennzeichnet, daß die Kurbel (11) und die Koppel (12) in zurückgezogener, der Rastlage entsprechenden Endlage des Schlittens (3) in ihrer sich gegenseitig verlängernden Strecklage angeordnet sind.

3. Vorrichtung nach Anspruch 1 oder 2, dadurch gekennzeichnet, daß der Schlitten (3) am Getriebegehäuse (2) im wesentlichen horizontal und der Träger (4) am Schlitten (3) im wesentlichen vertikal geführt ist.

4. Vorrichtung nach Anspruch 1 mit Gleitstangen als Führungen, dadurch gekennzeichnet, daß für den Schlitten (3) am Getriebegehäuse (2) zwei horizontale Gleitstangen (16, 17) und für den Träger (4) am Schlitten (3) zwei vertikale Gleitstangen (18, 19) fest angeordnet sind.

5. Vorrichtung nach Anspruch 1, dadurch gekennzeichnet, daß das erste Komplementärkurvenscheibenpaar (6, 7) zwei zueinander in Umfangsrichtung versetzte Zahnsegmente (20, 20' bzw. 21, 21') für den Eingriff in zwei auf der ersten Steuerwelle (10) angeordnete Rollenkränze (22, 23) aufweist.

6. Vorrichtung nach Anspruch 1, dadurch gekennzeichnet, daß die zweite Steuerwelle (13) als Pendelwelle mit einem doppelten Kipphebel (24) ausgerüstet ist, dessen Enden (25, 26) zur Anlage am zweiten Komplementärkurvenscheibenpaar (8, 9) angeordnet sind.

7. Vorrichtung nach Anspruch 6, dadurch gekennzeichnet, daß die zweite Steuerwelle (13) über einen an ihrem freien Ende (36) vorgesehenen Schwenkhebel (37) durch eine Relativbewegung zwischen dem Schwenkhebel (37) und dem Schlitten (3) ermöglichende Ausnehmung (38) im Schlitten (3) mit dem Träger (4) zusammenarbeitet.

8. Vorrichtung nach Anspruch 7, dadurch gekennzeichnet, daß das freie Ende (39) des Schwenkhebels (37) an einem Gleitlager (40) drehbar angreift, welches auf einer mit dem Träger (4) fest verbundenen Tragstange (41) hin- und herbewegbar ist.

9. Vorrichtung nach Anspruch 8, dadurch gekennzeichnet, daß das freie Ende (39) des Schwenkhebels (37) mittels eines Achsbolzens (42) mit einer auf dem Gleitlager (40) vorgesehenen Lasche (43) verbunden ist.

10. Vorrichtung nach Anspruch 4 und/oder 8, dadurch gekennzeichnet, daß der Schlitten (3), der Träger (4) und das freie Ende (39) des Schwenkhebels (37) mittels Linearkugellagern (40', 44, 45, 46, 47) auf den zugehörigen Gleitstangen (16, 17, 18, 19, 41) geführt sind.

11. Vorrichtung nach Anspruch 10, dadurch gekennzeichnet, daß die Linearkugellager (46, 47) für die Gleitstangen (16, 17) des Schlittens (3) geschlitzt sind.

12. Vorrichtung nach mindestens einem der vorhergehenden Ansprüche, dadurch gekennzeichnet, daß auf der Antriebswelle (5) ein Schneckenrad (50) angeordnet ist, und der Antrieb über eine gesonderte Motorwelle (51) mit Schnecke (52) erfolgt.

13. Vorrichtung nach Anspruch 1 mit einem Antriebsmotor, dadurch gekennzeichnet, daß derselbe ein Wirbelstrombremsmotor (1) ist.

14. Vorrichtung nach Anspruch 1, dadurch gekennzeichnet, daß zwei Umdrehungen der Antriebswelle (5) einem Betriebsspiel bzw. einem Takt von Raststellung zu Raststellung entsprechen.

15. Vorrichtung nach Anspruch 1, dadurch gekennzeichnet, daß der Träger (4) eine in ihrer Ebene bewegte Platte ist.

16. Vorrichtung nach Anspruch 15, dadurch gekennzeichnet, die Platte Winkelform aufweist und sowohl an ihrer vom Schlitten (3) abgewandten Fläche (53) als auch an ihrer abgewinkelten Stirnfläche (54) Gewindebohrungen (55) zur Befestigung von Werkzeugen besitzt.

17. Vorrichtung nach Anspruch 16, dadurch gekennzeichnet, daß die Abstände (b) der Bohrungen (55) derart gewählt sind, daß sich bei entsprechend angeordneten Werkzeugen die Wirkung des Längshubs (A) durch ein Zwischenabsetzen des transportierten Werkstücks oder Montageteils verdoppeln läßt.

## Claims

1. Apparatus for manipulation of workpieces, assembly parts or the like comprising arranged in a housing (2) providing a gearbox a step-by-step motion transmission having a lock-in position and controlling two reciprocal movements via cam discs (6, 7, 8, 9) fixed on a drive shaft, namely as a first movement such of a carriage (3) guided on the box and as a second movement such of a holder (4) guided on the carriage essentially transversal to the first movement, characterized in that not only for the control of the first movement (A) but also for the control of the second movement (B) two complementary cam discs (6, 7) or (8, 9) are present respectively and in that the first pair of complementary cam discs (6, 7) is coupled to the carriage (3) via a first control shaft (10) and a crank gear consisting of crank (11) and coupler (12), whereby the crank (11) and the coupler (12) in the lock-in position of the step-by-step motion transmission are arranged in a dead point position, and in that the second pair of complementary cam discs (8, 9) cooperates with the holder (4) via a second control shaft (13).

2. Apparatus according to claim 1, characterized in that the crank (11) and the coupler (12) in their retracted end position corresponding to the lock-in position of the carriage (3) are arranged in a stretched position in which they mutually extend each other.

3. Apparatus according to claim 1 or 2, characterized in that the carriage (3) is essentially horizontally guided on the housing (2) and the holder (4) is essentially vertically guided on the carriage (3).

4. Apparatus according to claim 1 with slide rods as guidances, characterized in that for the carriage (3) two horizontal slide rods (16, 17) are fixedly attached to the gearbox housing (2) and for the holder (4) two vertical slide rods (18, 19) are fixedly attached to the carriage (3).

5. Apparatus according to claim 1, characterized in that the first pair of complementary cam discs (6, 7) comprises two tooth segments (20, 20') or (21, 21') displaced circumferentially with respect to one another for engagement in two roller rings (22, 23) located on the first control shaft (10).

6. Apparatus according to claim 1, characterized in that the second control shaft (13) is configured as a swing shaft with a double rocker lever (24) whose ends (25, 26) are positioned to rest on the second pair of complementary cam discs (8, 9).

7. Apparatus according to claim 6, characterized in that the second control shaft (13) operates in combination with the holder (4) through a rocking lever (37) provided at the free end of said shaft (13) through a recess (38) in said carriage (3) which permits relative motion between said rocking lever (37) and said carriage (3).

8. Apparatus according to claim 7, characterized in that the free end (39) of the rocking lever (37) rotatably engages a slide bearing (40) which is movable to and fro on a support rod (41) which is fixedly attached to the holder (4).

9. Apparatus according to claim 8, characterized in that the free end (39) of rocking lever (37) by means of an axle bolt (42) is connected to a bracket (43) provided on the slide bearing (40).

10. Apparatus according to claim 4 and/or 8, characterized in that the carriage (3), the holder (4) and the free end (39) of rocking lever (37) are guided on the respective slide rods (16, 17, 18, 19, 41) by means of linear roller bearings (40', 44, 45, 46, 47).

11. Apparatus according to claim 10, characterized in that the linear roller bearings (46, 47) are slit for the slide rods (16, 17) of carriage (3).

12. Apparatus according to at least one of the precedings claims, characterized in that a worm wheel (50) is attached to drive shaft (5) and that actuation occurs via a particular motor shaft (51) with a worm (52).

13. Apparatus according to claim 1 with a driving engine, characterized in that same is an eddy-current brake motor (1).

14. Apparatus according to claim 1, characterized in that two revolutions of the drive shaft (5) correspond to one operating cycle or one step from lock-in position to lock-in position, resp.

15. Apparatus according to claim 1, characterized in that the holder (4) is a plate which is moved in its own plane.

16. Apparatus according to claim 15, characterized in that the plate is configured as an angle and has threaded holes (55) therein for fastening tools not only on its face (53) away from the carriage (3) but also at its angled front face (54).

17. Apparatus according to claim 16, characterized in that the spacings (b) between the holes (55) are dimensioned such that with tools appropriately positioned therein the action of the longitudinal stroke (A) can be doubled by an intermediate release of a transported workpiece or assembly part.

**Revendications**

1. Dispositif permettant la manutention de pièces, éléments de montage ou autres, comportant un mécanisme de commande pas à pas présentant une position d'encliquetage, disposé dans un carter (2) qui commande, par l'intermédiaire de disques à cames (6, 7, 8, 9) fixés sur un arbre d'entrainement, deux mouvements réciproques, à savoir comme premier mouvement celui d'un chariot (3) guidé sur le carter et comme deuxième mouvement, celui d'un support (4) guidé sur le chariot essentiellement transversalement au premier mouvement, caractérisé par le fait qu'il existe aussi bien pour la commande du premier mouvement (A) que pour la commande du deuxième mouvement (B) dans chaque cas, deux disques à cames complémentaires (6, 7 et 8, 9) et que la première paire de disques à cames complémentaires (6, 7) est accouplée au chariot (3) par l'intermédiaire d'un premier arbre de commande (10) et d'un mécanisme à bielle et manivelle, constitué de la manivelle (11) et de la bielle (12), la manivelle (11) et la bielle (12) étant disposées dans la position d'encliquetage du mécanisme de commande pas à pas, dans une position de point mort, et la deuxième paire de disques à cames complémentaires (8, 9) coopérant, par l'intermédiaire d'un deuxième arbre de commande (13) avec le support (4).

2. Dispositif selon la revendication 1, caractérisé par le fait que la manivelle (11) et la bielle (12) sont disposées dans la position d'extrémité ramenée en arrière, correspondant à la position d'encliquetage du chariot (3), dans leurs positions d'extension s'allongeant en sens opposé.

3. Dispositif selon la revendication 1 ou 2, caractérisé par le fait que le chariot (3) est guidé sur le carter (2) essentiellement horizontalement et que le support (4) est guidé sur le chariot (3) essentiellement verticalement.

4. Dispositif selon la revendication 1, comportant des coulisses comme glissières, caractérisé par le fait qu'il est fixé, pour le chariot (3) sur le carter (2), deux coulisses horizontales (16, 17) et, pour le support (4) sur le chariot (3), deux coulisses verticales (18, 19).

5. Dispositif selon la revendication 1, caractérisé par le fait que la première paire de disques à cames complémentaires (6, 7) présente deux secteurs dentés décalés entre eux dans le sens de la périphérie (20, 20' et 21, 21') pour l'engrènement dans deux couronnes à rouleaux (22, 23) disposées sur le premier arbre de commande (10).

6. Dispositif selon la revendication 1, caractérisé par le fait que le deuxième arbre de commande (13) est pourvu, en tant qu'arbre oscillant, d'un double levier basculant (24) dont les extrémités (25, 26) sont disposées de manière à venir en contact avec la deuxième paire de disques à cames complémentaires (8, 9).

7. Dispositif selon la revendication 6, caractérisé par le fait que le deuxième arbre de commande (13) coopère avec le support (4) par l'intermédiaire d'un levier pivotant (37) prévu en son extrémité libre (36), grâce à un évidement (38) dans le chariot (3) permettant un mouvement relatif entre le levier pivotant (37) et le chariot (3).

8. Dispositif selon la revendication 7, caractérisé par le fait que l'extrémité libre (39) du levier pivotant (37) s'engage de manière à pouvoir tourner avec un palier lisse (40) qui peut être déplacé selon un mouvement de va-et-vient sur une tige porteuse (41) solidaire du support (4).

9. Dispositif selon la revendication 8, caractérisé par le fait que l'extrémité libre (39) du levier pivotant (37) est reliée au moyen d'un boulon d'axe (42) à un système d'attache prévu sur le palier lisse (40).

10. Dispositif selon la revendication 4 et/ou 8, caractérisé par le fait que le chariot (3), le support (4) et l'extrémité libre (39) du levier pivotant (37) sont guidés au moyen de roulements à billes linéaires (40', 44, 45, 46, 47) sur les coulisses correspondantes (16, 17, 18, 19, 41).

11. Dispositif selon la revendication (10), caractérisé par le fait que les roulements à billes linéaires (46, 47) sont fendus pour le passage des coulisses (16, 17) du chariot (3).

12. Dispositif selon au moins une des revendications précédentes, caractérisé par le fait qu'une roue à denture hélicoïdale (50) est disposée sur l'arbre d'entrainement (5) et que l'entrainement a lieu par l'intermédiaire d'un arbre de moteur séparé (51) comportant une vis sans fin (52).

13. Dispositif selon la revendication 1 avec un moteur d'entrainement, caractérisé par le fait que ce dernier est un moto-frein à courants de Foucault (1).

14. Dispositif selon la revendication 1, caractérisé par le fait que deux tours de l'arbre d'entrainement (5) correspondent à un cycle ou à une sequénce, d'une position d'encliquetage à une autre.

15. Dispositif selon la revendication 1, caractérisé par le fait que le support (4) est une plaque mobile dans son plan.

16. Dispositif selon la revendication 15, caractérisé par le fait que la plaque présente une forme angulaire et possède, aussi bien sur sa surface (53) éloignée du chariot (3) qu'au niveau de la surface avant coudée (54), des trous taraudés (55) pour la fixation d'outils.

17. Dispositif selon la revendication 16, caractérisé par le fait que les écartements (b) des trous (55) sont choisis de telle sorte que l'effet de la course longitudinale (A) soit doublé, lorsque les outils sont disposés en conséquence, par un déplacement intermédiaire de la pièce ou de l'élément de montage transporté(e).

Fig.1

Fig.2

# Fig.3

Fig.4